(19) Europäisches Patentamt / European Patent Office / Office européen des brevets

(11) EP 4 745 840 A1

(12) **EUROPEAN PATENT APPLICATION**

(43) Date of publication:
20.05.2026 Bulletin 2026/21

(21) Application number: 25215962.9

(22) Date of filing: 14.11.2025

(51) International Patent Classification (IPC):
$G06N\ 3/045^{(2023.01)}$   $G06N\ 3/0475^{(2023.01)}$

(52) Cooperative Patent Classification (CPC):
G06N 3/045; G06N 3/0475

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 14.11.2024 US 202463720714 P

(71) Applicant: GDM Holding LLC
Mountain View, CA 94043 (US)

(72) Inventors:
• Piergiovanni, Anthony Jacob
  Mountain View, 94043 (US)
• Mallya, Ganesh Satish
  London, N1C 4AG (GB)
• Kim, Dahun
  Mountain View, 94043 (US)
• Angelova, Anelia
  Mountain View, 94043 (US)

(74) Representative: Marks & Clerk GST
1 New York Street
Manchester M1 4HD (GB)

(54) **PROCESSING MULTIDIMENSIONAL DATA USING NEURAL STATE-SPACE MODELS**

(57) Methods, systems, and apparatus, including computer programs encoded on computer storage media, for processing an input sequence of multi-dimensional data using a state-space model (SSM) system. The SSM system includes a neural state-space model. The neural state-space model includes a stack of one or more SSM layers.

FIG. 1

EP 4 745 840 A1

## Description

CROSS-REFERENCE TO RELATED APPLICATIONS

This application claims priority to U.S. Provisional Application No. 63/720,714, filed on November 14, 2024. The disclosure of the prior application is considered part of and is incorporated by reference in its entirety in the disclosure of this application.

BACKGROUND

This specification relates to processing videos using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

SUMMARY

This specification describes a state-space model system implemented as computer programs on one or more computers in one or more locations that processes an input sequence of multi-dimensional data and generates outputs that characterize data segments of the input sequence of multi-dimensional data.

According to an aspect, there is provided a method performed by one or more computers, the method comprising: receiving an input sequence of multidimensional data; partitioning the input sequence of multi-dimensional data into a sequence of data segments; for each data segment that is after a first data segment in the sequence of data segments: processing the data segment using an encoder neural network to generate an encoded representation of the data segment; and generating a hidden state that corresponds to the data segment by using a neural state-space model to process the encoded representation of the data segment and a preceding hidden state that corresponds to a preceding data segment that precedes the data segment in the sequence of data segments, wherein the neural state-space model comprises one or more layers, each layer comprising a convolution kernel, the convolution kernel comprising parameters that represent a state matrix, an input matrix, and an output matrix of a state-space model; and for each of one or more data segments in the sequence of data segments, generating, using a decoder neural network and based on a previous hidden state that corresponds to a preceding data segment, an output that characterizes the data segment.

The method may further comprise, for the first data segment in the sequence of data segments: processing the first data segment using the encoder neural network to generate an encoded representation of the first data segment; generating an output of the neural state-space model that corresponds to the first data segment by using the neural state-space model to process the encoded representation of the first data segment; and generating, using the decoder neural network and from the output of the neural state-space model that corresponds to the first data segment, an output that characterizes the first data segment.

The input sequence of multi-dimensional data may comprise an input sequence of video data. The input sequence of video data may comprise a live stream of video data that is being streamed. The input sequence of multi-dimensional data may comprise an input sequence of audio data. The state matrix may be a diagonal matrix. The encoder neural network may comprise a vision Transformer neural network, and wherein the encoded representation of the data segment comprises a plurality of visual tokens. The decoder neural network may comprise a text decoder neural network, and wherein the output that characterizes the data segment may comprise a text caption of a video segment that comprises one or more video frames.

According to another aspect, there is provided one or more computer-readable storage media encoded with instructions that, when executed by one or more computers, cause the one or more computers to perform the operations of the above method aspect.

According to a further aspect, there is provided a system comprising one or more computers and one or more storage devices storing instructions that when executed by one or more computers cause the one or more computers to perform the respective operations of the above method aspect.

It will be appreciated that features described in the context of one aspect may be combined with features described in the context of another aspect.

The subject matter described in this specification can be implemented in particular embodiments so as to realize one or more of the following advantages.

State-space models (SSMs) scale better than Transformers because of the difference in their computational complexity concerning sequence length. Transformer architectures employ attention mechanisms that result in a quadratic scaling ($O(n^2)$) of computational cost with increasing sequence lengths (n). This quadratic cost makes Transformers very computationally expensive to compute, particularly for long input sequences. In contrast, SSMs provide efficient, near linear-scaling processing of the sequence that is achieved because SSMs utilize a convolutional formulation.

A problem with applying existing SSMs to long input sequences is that their standard, efficient convolutional derivation requires the full input sequence to be available and loaded entirely in memory. While SSMs scale better than Transformers, this dependency causes computational and memory limitations, particularly when handling arbitrarily long inputs sequences or videos that generate vast numbers of tokens. Additionally, a recurrent hidden state in existing SSMs tends to deteriorate when managing very long contexts.

Leveraging a per-segment state update technique to propagate the hidden state across the data segments of the input sequence of multi-dimensional data, the state-space model system described in this specification overcomes limitations faced by existing state-space models that the hidden state starts to deteriorate with longer input lengths, i.e., that the hidden state loses information over time. The described state-space model system can thus handle very long input sequences of multi-dimensional data because it can effectively preserve more information of the entire input sequence in its hidden state.

By processing shorter, manageable data segments sequentially while explicitly maintaining and propagating the hidden state, the state-space model system described in this specification can thus generate outputs that characterize an input sequence of multi-dimensional data of varying lengths.

For example, the system can generate outputs that characterize respective segments of a very long, potentially continuously streaming, video (or audio or other high multi-dimensional sensor data). The long video (or audio or other high multi-dimensional sensor data) includes a sequence of a large number of video frames (or audio or another high multi-dimensional sensor data frames). As a particular example, the system can generate outputs that characterize respective segments of a video that lasts 315 seconds or longer and has 256 or more video frames, which is significantly longer than at most 60 seconds and 64 frames as reached by existing state-space models.

At a given time step, the system generates a hidden state that corresponds to the time step by using a neural state-space model based on a data segment that corresponds to the time step and on a previous hidden state that was previously generated by the neural state-space model and that corresponds to an immediately preceding time step. Maintaining and updating such a hidden state across multiple time steps by using the neural state-space model in this way enables the system to efficiently process multi-dimensional data with long lengths while being able to generate outputs that capture long-range dependencies between data segments of the input sequence of the multi-dimensional data.

In particular, at a given time step during the processing of the input sequence of multi-dimensional data, the system need only maintain in a memory the hidden state for the data segment that corresponds to the time step. Because previous hidden states for data segments that correspond to previous time steps need not be stored in the memory, the storage consumption of the system can be reduced, compared to some other systems that accumulate or combine previous hidden states, or systems that store previous hidden states in the memory.

Maintaining and updating such a hidden state across multiple time steps along a temporal dimension in this way can improve responsiveness and reduce latency in an online setting, because the system can begin generating outputs based on the already available data segments of the input sequence of multi-dimensional data, and continue to generate additional outputs based on additional data segments of the input sequence of multi-dimensional data as they become available.

The improved responsiveness and reduced latency can be advantageous for use cases that require outputs quickly. For example, the system described in this specification can achieve real-time or near-real-time scene characterization of a real-world environment to facilitate safer, more accurate, and more timely control of robots (or other agents, such as autonomous driving vehicles) that are performing tasks in the real-world environment.

The details of one or more embodiments of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a schematic diagram that shows a state-space model (SSM) system along a temporal axis.
FIG. 2 is a flow diagram of an example process for generating outputs that characterize data segments of an input sequence of multi-dimensional data.
FIG. 3 is a flow diagram of sub-steps of one of the steps of the process of FIG. 2.
FIG. 4 shows a quantitative example of the performance gains that can be achieved by the state-space model system described in this specification.

Like reference numbers and designations in the various drawings indicate like elements.

DETAILED DESCRIPTION

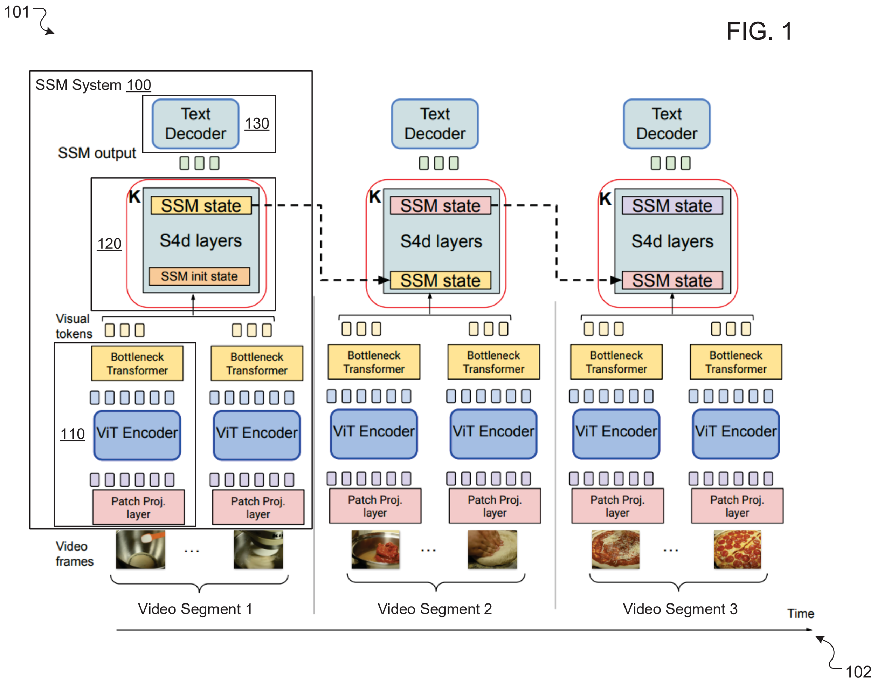

FIG. 1 is a schematic diagram 101 that shows a state-space model (SSM) system 100 along a temporal axis 102. The state-space model system 100 is an example of a system implemented as computer programs on one or more computers in one or more locations that processes an input sequence of multi-dimensional data and generates outputs that characterize data segments of the input sequence of multi-dimensional data.

The multi-dimensional data can include any data that resides in a multi-dimensional space where one dimension in the multi-dimensional space corresponds to the temporal, or time, dimension.

For example, the input sequence of multi-dimensional data can include video data.

As another example, the input sequence of multi-dimensional data can include audio data.

As another example, the input sequence of multi-dimensional data can include other multi-dimensional sensor data, e.g., LIDAR data, electrocardiogram (ECG) data, electroencephalographic (EEG) data, or sensed data from a machine, e.g. a mechanical or electromechanical machine, relating to operation of the machine.

In some implementations, as illustrated in FIG. 1, the state-space model system 100 can process a video and generate outputs that characterize video segments of the video. The video includes a respective video frame at each of a plurality timestamps. Each video frame can be or include an image. Each video segment includes a respective video frame at each timestamp in a respective subset of the plurality timestamps of the video. Thus, processing the video includes processing the intensity values of the pixels of the video frames in the video. In general a video segment can include one video frame or a plurality of video frames, e.g. 16 or 32 frames.

In some implementations, the state-space model system 100 can process an audio input using neural networks as described below and generate outputs that characterize audio segments of the audio. The audio input includes a respective audio frame at each of a plurality timestamps. Each audio frame can include audio data, e.g., amplitude or spectral information of an audio signal over a predetermined period of time.

When the input sequence of multi-dimensional data includes video data, some examples of outputs that the state-space model system 100 can generate from the video are as follows.

In some implementations, the state-space model system 100 generates an output that characterize each data segment in the input sequence of multi-dimensional data whereas, in other implementations, the state-space model system 100 generates an output that characterize each of a smaller subset of the data segments in the input sequence of multi-dimensional data, e.g., only the last one of the data segments in the input sequence of multi-dimensional data.

For example, the output for a video segment is a video captioning output. The video captioning output can include a natural language output sequence, e.g., a sequence of words, that is descriptive of the video segment.

As another example, the output for a video segment is an action recognition output. An action recognition output for a video segment can recognize (e.g. describe in natural language or otherwise characterize) an action that spans multiple video frames in the video segment. The action can for example be an action, activity, and/or other temporally varying occurrence which involves a human actor and/or a non-human actor, such as an animal, a robot, an inanimate object, or portions thereof.

When the action recognition output of the video is expressed as text, the action recognition output of the video may include at least one verb that is descriptive of the action, activity, and/or other temporally varying occurrence. Action recognition outputs may be used to facilitate video retrieval, video captioning, and/or visual question-and-answer, among other tasks.

As yet another example, the output for a video segment is an action localization output. The action localization output can identify an action spatially, e.g., by defining the coordinates of bounding boxes that enclose respective actions depicted in the video frames. Additionally or alternatively, the action localization output can identify an action temporally, e.g., by identifying one or more timestamps within the video segment during which the action is depicted in the corresponding video frames.

In some implementations, the output for a video segment can be represented by text tokens selected from a vocabulary of text tokens that includes, e.g., one or more of characters, sub-words, words, punctuation marks, numbers, or other symbols that appear in natural language text.

When the input sequence of multi-dimensional data includes audio data, some examples of outputs that the state-space model system 100 can generate include a speech recognition output, which is a text transcript of the spoken words in the audio, a sound classification output (e.g., identifying a dog bark, music genre, or breaking glass), a speaker identification output, which identifies a speaker from a predetermined group people, an acoustic scene classification output, which identifies a location of the recording (e.g., street, office, forest), and so on.

When the input sequence of multi-dimensional data includes sensor data, some examples of outputs that the state-space model system 100 can generate an activity recognition output, which identifies an action associated with the sensor data (e.g., walking, running, sitting, falling), an anomaly detection output (e.g. from an ECG or EEG signal, e.g., detecting an irregular heartbeat or seizure), a predictive maintenance output (e.g., predicting when a machine or machine part will fail), and so on.

In some implementations, the input sequence of multi-dimensional data is prestored data. For example, the video can be a prestored video. Upon obtaining the prestored video, the state-space model system 100 partitions the video into a plurality of video segments.

In some of these implementations, the plurality of data segments can each have about equal length. For example, a video can be divided into video segments based at least in part on a fixed segment length. In some of these implementations, the plurality of data segments can be nonoverlapping. For example, a given frame may be included within only one video segment of the plurality of video segments. In some implementations each data segment can comprise multiple frames.

In some other implementations, the input sequence of multi-dimensional data is live streaming data, and the state-space model system 100 can generate the outputs on-the-fly, in an online or streaming manner. That is, the state-space model system 100 can process a new segment every time a fixed number of new data frames are received.

For example, the video can be a live streaming video that is being received as a stream of video frames, and the state-space model system 100 can receive a video in real-time and generate an output that characterize a video segment as new video frames that make up the video segment arrive. Thus, up-to-date outputs that characterize the latest video segments can be continuously generated.

More generally, upon obtaining an input sequence of multi-dimensional data, the state-space model system 100 can partition the input sequence of multi-dimensional data into a sequence of data segments. The data segments can be arranged in a predetermined order, e.g., in the temporal order in which they are obtained.

The state-space model system 100 includes an encoder neural network 110, a neural state-space model 120, and a decoder neural network 130.

The encoder neural network 110 is configured to, at a time step along the temporal axis 102, process the data segment of the input sequence of multi-dimensional data that corresponds to the time step to generate an encoded representation of the data segment that corresponds to the time step. The encoder neural network 110 can generally have any appropriate architecture that maps a data segment to an encoded representation of the data segment.

For example, when the multi-dimensional data includes audio data or sensor data, the encoder neural network 110 can include one or more convolutional layers, one or more fully-connected layers, or both. As another example, when the multi-dimensional data includes video data, the encoder neural network 110 can include one or more attention layers.

As a particular example, in FIG. 1, the multi-dimensional data includes video data, and the encoder neural network 110 includes a patch projection layer, a vision Transformer (ViT) neural network, and a bottleneck Transformer neural network.

For each video frame in a video segment, the patch projection layer is configured to map the video frame that is an image to a plurality of image patches. Each image patch includes a different subset of the pixels of the image.

The vision Transformer (ViT) encoder neural network includes one or more attention layers, e.g., one or more self-attention layers that each apply a self-attention operation, one or more cross-attention layers that each apply a cross-attention operation, or both.

The ViT encoder neural network is configured to, for each video frame in the video segment, process the plurality of image patches generated from the video frame to generate an initial sequence that includes a respective token ("visual token") at each of a plurality of positions, where the initial sequence includes a respective token corresponding to each of the plurality of image patches. Thus, the initial sequence includes tokens generated from all video frames in the video segment.

A token refers to an ordered collection of numerical values, e.g., a vector, matrix, or other tensor of numerical values.

The bottleneck Transformer neural network includes one or more attention layers, e.g., one or more self-attention layers, one or more cross-attention layers, or both.

The bottleneck Transformer neural network is configured to process the initial sequence to generate an encoded representation of the video segment. The encoded representation of the video segment includes a smaller number of tokens than the initial sequence, e.g., is a shorter sequence that includes a respective token ("visual token") at each of a smaller number of positions. That is, the encoded representation of the video segment is a more compact representation of the initial sequence.

The neural state-space model 120 is configured to, at a time step that is after the first time step along the temporal axis 102, receive the encoded representation of the data segment that corresponds to the time step and to generate an updated hidden state of the neural state-space model 120 that corresponds to the time step based on processing the encoded representation and a preceding hidden state that corresponds to (e.g. encodes) a preceding data segment that precedes the given data segment in the sequence of data segments (and that corresponds to a preceding time step), i.e., to update the preceding hidden state that has been generated by processing the preceding data segment by processing the given encoded representation.

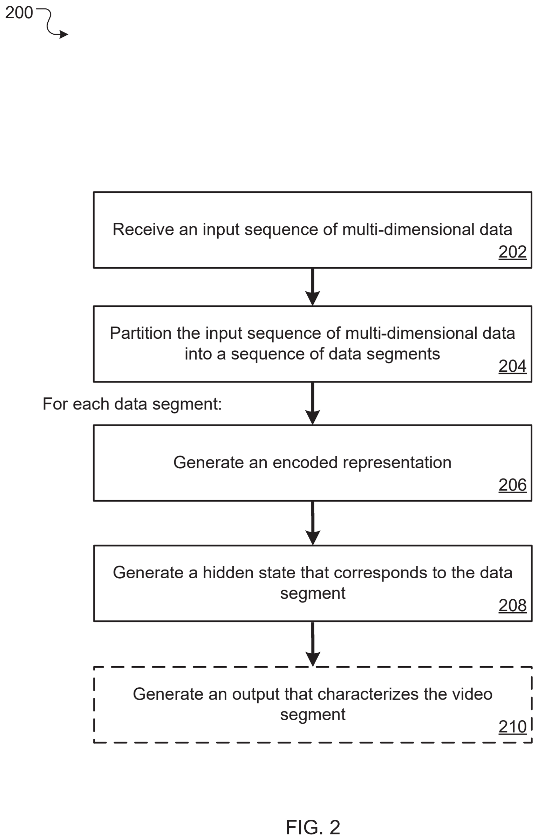

Leveraging the per-segment state update technique as will be described below with reference to FIG. 2 to propagate the hidden state across the data segments of the input sequence of multi-dimensional data, the neural state-space model 120 overcomes limitations faced by existing state-space models that the hidden state starts to deteriorate with longer input lengths, i.e., that the hidden state loses information over time, can thus handle very long input sequences of multi-dimensional data because it can effectively preserve more information of the entire input sequence in its hidden state.

The neural state-space model 120 is also configured to, at the time step, generate an output of the neural state-space model 120 that corresponds to the time step based on processing the encoded representation.

The updated hidden state of the neural state-space model 120 generated after processing an encoded representation of a data segment that corresponds to a time step will be referred to in this specification as the hidden state of the neural state-space model 120 that corresponds to the data segment (and that corresponds to the time step).

The hidden state represents an internal state of a state-space model that is a sequential representation of the given data segment of the input sequence of multi-dimensional data. State-space models are computer models that use state variables to describe a dynamic system by a set of first-order differential or difference equations. The state variables represent the current condition of the system, and the equations relate how these state variables change over time based on inputs and output.

For the first time step, where the data segment is the first data segment in the input sequence of multi-dimensional data, the neural state-space model 120 is configured to generate the hidden state that corresponds to the first time step based on processing the encoded representation of the first data segment and, optionally, in some implementations, a pre-determined, initial hidden state.

The neural state-space model 120 includes a stack of one or more state space model (SSM) layers. Each SSM layer includes one or more convolution kernels. Each SSM layer includes parameters that represent a state tensor A (e.g., a state matrix A), an input tensor B (e.g., an input matrix B), and an output tensor C (e.g., an output matrix C). Each SSM layer maintains a hidden state that can be updated by using a convolution kernel.

The tensors (matrices) can represent a state space model; a state space model can be a model that maintains a representation of a (hidden) state, $h$. More particularly the state tensor A (e.g., state matrix A) can process the hidden state, and the input tensor B (e.g., input matrix B) can process an input to the SSM layer, to update the hidden state (e.g. as $h' = Ah + Bx$). The output tensor C (e.g., output matrix C) can process the hidden state to generate an output of the layer (e.g. as $y = Ch + Dx$ where typically $D$ is omitted i.e. $D = 0$).

Each SSM layer can be any appropriate sequence modeling layer that allows the neural state-space model to maintain a hidden state and update the hidden state across multiple time steps.

For example, the SSM layers can include the S4 layer described in Albert Gu, Karan Goel, and Christopher Ré. Efficiently modeling long sequences with structured state spaces. In ICLR, 2022.

As another example, the SSM layers can include the S4D layer described in Albert Gu, Ankit Gupta, Karan Goel, and Christopher Ré. On the parameterization and initialization of diagonal state space models. 2022. In this example the neural state-space model can be a diagonal state-space model where the state matrix A represented by parameters of each SSM layer is a diagonal matrix.

As another example, the SSM layers can include the S4ND layer described in Eric Nguyen, Karan Goel, Albert Gu, Gordon W. Downs, Preey Shah, Tri Dao, Stephen A. Baccus, and Christopher Ré. S4ND: Modeling images and videos as multidimensional signals using state spaces. 2022.

As another example, the SSM layers can include the S5 layer described in Scott W. Linderman Jimmy T.H. Smith, Andrew Warrington. Simplified state space layers for sequence modeling. arXiv preprint arXiv:2208.04933 (2022).

The neural state-space model 120 can include one or more other layers, including, for example, linear layers (projection layers), normalization layers, residual connection layers, and (non-linear) activation layers.

During the processing of the data segments in the sequence, the state-space model system 100 need only maintain in a memory, e.g., an on-chip memory of a hardware accelerator, the hidden state of the neural state-space model 120 that corresponds to the data segment that is currently being processed.

In other words, historic hidden states of the state-space model system 100 that correspond to the previous data segments in the sequence are no longer needed, and if desired, they can be discarded to free up memory and to keep the memory footprint of the state-space model system 100 low.

The decoder neural network 130 is configured to, at a time step along the temporal axis 102, generate an output that characterizes the data segment that corresponds to the time step based on the output of the neural state-space model 120 that corresponds to the data segment (and that corresponds to the time step).

The decoder neural network 130 can include any appropriate types of neural network layers (e.g., fully connected layers, attention layers, activation layers, and so forth) in any appropriate number (e.g., 2 layers, or 5 layers, or 10 layers) and connected in any appropriate configuration (e.g., as a directed graph of layers). The decoder neural network 130 can be any type of neural network that is suitable for generating an output of the desired type.

As a particular example, in FIG. 1, the decoder neural network 130 has a text decoder neural network architecture. For example, the text decoder neural network can have one of the text decoder architectures described in Radford, Alec, et al. Learning transferable visual models from natural language supervision. International conference on machine learning. PMLR, 2021, Alayrac, Jean-Baptiste, et al. Flamingo: a visual language model for few-shot learning, Advances in neural information processing systems 35 (2022): 23716-23736, and Yang, Antoine, et al., Vid2seq: Large-scale pretraining of a visual language model for dense video captioning. Proceedings of the IEEE/CVF Conference on Computer Vision and Pattern Recognition. 2023.

FIG. 2 is a flow diagram of an example process 200 for generating outputs that characterize data segments of an input sequence of multi-dimensional data. For convenience, the process 200 will be described as being performed by a system of one or more computers located in one or more locations. For example, a state-space model (SSM) system, e.g., the state-space model (SSM) 100 depicted in FIG. 1, appropriately programmed in accordance with this specification, can perform the process 200.

The system receives an input sequence of multi-dimensional data (step 202). The multi-dimensional data can include any data that resides in a multi-dimensional space where one dimension in the multi-dimensional space corresponds to the temporal, or time, dimension.

The system partitions the input sequence of multi-dimensional data into a sequence of data segments (step 204). In some implementations, the sequence of data segments can each have about equal length along the temporal dimension. In some implementations, the plurality of data segments can be nonoverlapping.

The system repeatedly performs steps 206-210 for each data segment (referred to below as a "given data segment") in one or more of the data segments in the sequence of data segments.

The system processes the given data segment using the encoder neural network to generate an encoded representation of the given data segment (step 206). The encoded representation can be a token sequence that includes a respective token at each of a plurality of positions.

The system processes the encoded representation of the given data segment using the neural state-space model to generate an output and a hidden state of the neural state-space model that correspond to the given data segment (step 208). The neural state-space model includes one or more state space model (SSM) layers.

To generate the output of the neural state-space model (the "SSM output") and the hidden state (the "SSM state") of the neural state-space model that correspond to the given data segment, the system performs steps 302-306 at each SSM layer (referred to below as a "given SSM layer") in the stack of one or more SSM layers included in the neural state-space model.

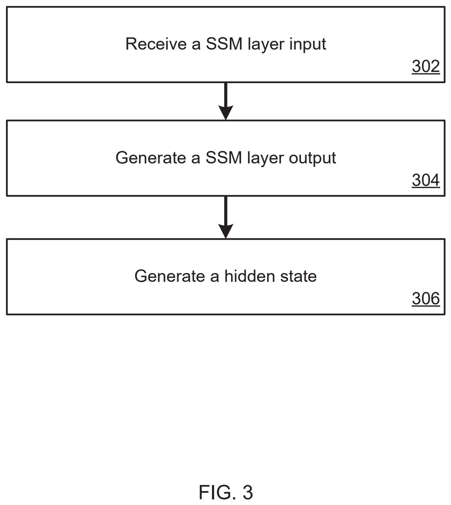

FIG. 3 is a flow diagram of sub-steps 302-306 of step 208 of the process of FIG. 2.

The given SSM layer receives a SSM layer input (step 302). The SSM layer input can be any intermediate sequential data obtained by the neural state-space model when processing input sequence of multi-dimensional data.

For example, when the given SSM layer is the first SSM layer in the stack, the SSM layer input can be the encoded representation of the given data segment generated by the encoder neural network, optionally further processed by one or more other layers, e.g., linear layers, normalization layers, and so on.

As another example, when the given SSM layer is a subsequent SSM layer in the stack, the SSM layer input can be a SSM layer output generated by a preceding SSM layer in the stack, optionally further processed by one or more other layers, e.g., linear layers, normalization layers, and so on.

The given SSM layer generates a SSM layer output of the given SSM layer that corresponds to the given data segment based on the SSM layer input and, when the given data segment is not the first data segment in the sequence of data segments, a preceding hidden state of the given SSM layer that corresponds to a preceding data segment that precedes the given data segment in the sequence of data segments (step 304).

When the given data is the first data segment in the sequence of data segments, the given SSM layer generates a SSM layer output of the given SSM layer that corresponds to the given data segment based on the SSM layer input and, optionally, in some implementations, a pre-determined, initial hidden state.

When the given data is not the last data segment in the sequence of data segments, the given SSM layer generates a hidden state of the given SSM layer that corresponds to the given data segment based on the SSM layer input and, when the given data segment is also not the first data segment in the sequence of data segments, the preceding hidden state of the given SSM layer that corresponds to the preceding data segment that precedes the given data segment in the sequence of data segments (step 306).

When the given data is the first data segment in the sequence of data segments, the given SSM layer generates a hidden state of the given SSM layer that corresponds to the given data segment based on the SSM layer input and, optionally, in some implementations, a pre-determined, initial hidden state.

When the given data is the last data segment in the sequence of data segments, step 306 may be omitted. That is, the given SSM layer generates a SSM layer output of the given SSM layer that corresponds to the given data segment, but may not generate the hidden state of the given SSM layer that corresponds to the given data segment.

For example, the SSM layer output and the hidden state of the given SSM layer can be generated as:

$$y = \overline{K} * x + \overline{CA^{(L-1)}} h_0$$

$$h = \overline{K_{hidden}} * x + \overline{A^{(L-1)}} h_0$$

where y is the SSM layer output and h is the hidden state. * represents a convolutional operation. $L$ is the length of the SSM layer input (the number of tokens included in the encoded representation).

Thus, the given SSM layer generates the SSM layer output of the given SSM layer that corresponds to the given data segment by convolving a first convolution kernel with the SSM layer input to generate a first convolution output, multiplying the output tensor C by the state tensor A raised to the power of $L$ - 1 by the preceding hidden state $h_0$ of the given SSM layer (or the pre-determined, initial hidden state) to generate a first matrix product, and adding the first convolution output to the first matrix product to generate a first sum. The first sum can then be used as the SSM layer output.

The given SSM layer generates the hidden state of the given SSM layer that corresponds to the given data segment by convolving a second convolution kernel with the SSM layer input to generate a second convolution output, multiplying the state tensor A raised to the power of L-1 by the preceding hidden state $h_0$ of the given SSM layer (or the pre-determined, initial hidden state) to generate a second matrix product, and adding the second convolution output to the second matrix product to generate a second sum. The second sum can then be used as the hidden state.

The first convolution kernel of the given SSM layer that is used to generate the SSM layer output y can be generated as:

$$\overline{K} = [\overline{CB}, \overline{CAB}, ..., \overline{CA^{(L-1)}B}]$$

Thus, the first convolution kernel (the "output convolution kernel") includes a concatenation of matrix products of the output tensor C, increasing powers of the state tensor A, and the input tensor B. For example, the first term in the first convolution kernel is a matrix product of the output tensor C, the state tensor A raised to the power of 0 (which is an identical matrix), and the input tensor B; the second term in the first convolution kernel is a matrix product of the output tensor C, the state tensor A raised to the power of 1, and the input tensor B; and the last term in the first convolution kernel is a matrix product of the output tensor C, the state tensor A raised to the power of $L$ - 1, and the input tensor B.

The second convolution kernel of the given SSM layer that is used to generate the hidden state h can be generated as:

$$\overline{K_{hidden}} = [\overline{B}, \overline{AB}, ..., \overline{A^{(L-1)}B}]$$

Thus, the second convolution kernel (the "hidden state convolution kernel") includes a concatenation of matrix products of the input tensor B and increasing powers of the state tensor A. For example, the first term in the second convolution kernel is a matrix product of the state tensor A raised to the power of 0 (which is an identical matrix) and the input tensor B; the second term in the second convolution kernel is a matrix product of the state tensor A raised to the power of 1 and the input tensor B; and the last term in the second convolution kernel is a matrix product of the state tensor A raised to the power of $L$ - 1 and the input tensor B.

For each SSM layer in the neural state-space model, the system can perform an iteration of the steps 302-306 based on the SSM layer input to the SSM layer. By repeatedly performing the steps 302-306 for all of the SSM layers in the neural state-space model, the system can generate the output of the neural state-space model that corresponds to the given data segment.

In some implementations, the SSM layer output of the last SSM layer is used as the output of the neural state-space model that corresponds to the given data segment.

In some implementations, the SSM layer output of the last SSM layer is processed using one or more other layers, e.g., linear layers, normalization layers, residual connection layers, activation layers, and so on, and then the processed SSM layer output of the last SSM layer is used as the output of the neural state-space model that corresponds to the given data segment.

In some implementations, a combination (e.g., sum or concatenation) of the SSM layer output of each of one or more of the SSM layers, or a processed combination which is generated by further processing the combination using one or more other layers, is used as the output of the neural state-space model that corresponds to the given data segment.

By repeatedly performing the steps 302-306 for all of the SSM layers in the neural state-space model, the system can generate the hidden state of the neural state-space model that corresponds to the given data segment.

In some implementations, the hidden state of the last SSM layer is used as the hidden state of the neural state-space model that corresponds to the given data segment.

In some implementations, the hidden state of the last SSM layer is processed using one or more other layers, e.g., linear layers, normalization layers, residual connection layers, activation layers, and so on, and then the processed hidden state of the last SSM layer is used as the hidden state of the neural state-space model that corresponds to the given data segment.

In some implementations, a combination (e.g., sum or concatenation) of the hidden state of each of one or more of the SSM layers, or a processed combination which is generated by further processing the combination using one or more other layers, is used as the hidden state of the neural state-space model that corresponds to the given data segment.

Optionally, the system generates, using the decoder neural network, an output that characterizes the given data segment (step 210). For example, the system can generate an output that characterizes each of one (e.g., the last) or more (e.g., all) of the data segments in the sequence of data segments. The output can be any one of the example outputs mentioned above.

The output can be generated by the decoder neural network by processing the output of the neural state-space model that corresponds to the given data segment. The decoder neural network need not process any outputs of the neural state-space model that correspond to preceding data segments that precede the given data segment in the sequence of data segments.

The process 200 can be performed as part of predicting outputs for an input sequence of multi-dimensional data for which the desired outputs, i.e., the outputs that should be generated by the system for the input sequence, are not known.

When the input sequence of multi-dimensional data is a live stream of data that is being streamed to the system, the outputs can be similarly generated on-the-fly, in an online or streaming manner, with each output being a "local" output that characterize a corresponding, individual data segment.

The process 200 can also be performed as part of processing input sequences of multi-dimensional data from a set of multi-dimensional training data, i.e., input sequences of multi-dimensional data for which the outputs that should be generated by the system are known, in order to train the state-space model (SSM) system to determine trained values for the trainable parameters of the system, e.g., including the parameters of the encoder neural network, the parameters of the decoder neural network, and the parameters that represent the state tensor A, the input tensor B, and the output tensor C of each SSM layer of the neural state-space model (and possibly parameters of other components of the neural state-space model). There are many suitable training databases, e.g. VideoCC (Nagrani et al., 2022) for video captions, Kinetics for video classification, AVA (Atomic Visual Actions, Gu et al., 2018) for action recognition; AudioSet (Gemmeke et al., 2017) for sound recognition; and so on.

The system can repeatedly perform the process 200 on input sequences selected from a set of multi-dimensional training data as part of a state-space model (SSM) training technique to train the state-space model (SSM) system based on optimizing an objective function that is appropriate for the outputs that the state-space model (SSM) system is configured to generate, e.g., a cross-entropy loss when the outputs are text outputs and a localization loss when the outputs are segment boundaries.

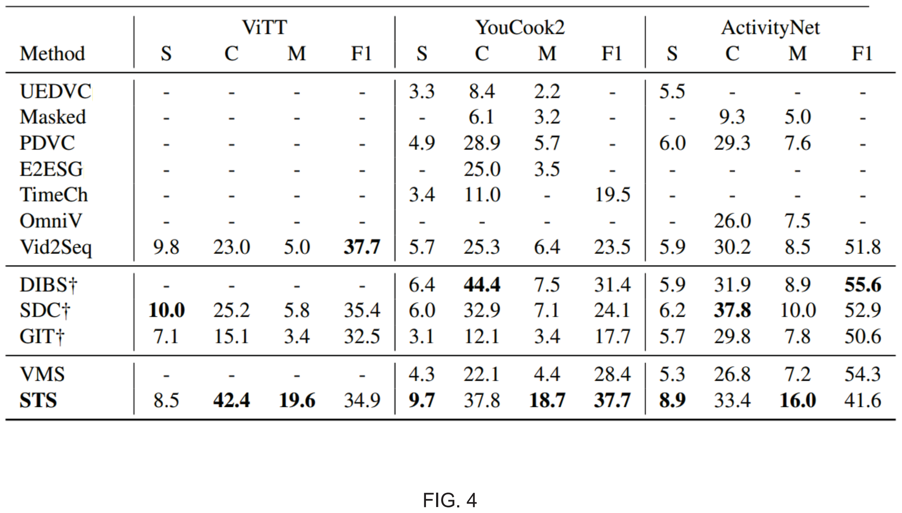

FIG. 4 shows a quantitative example of the performance gains that can be achieved by the state-space model system 100 of FIG. 1 described in this specification.

The table in FIG. 4 shows the results of the state-space model system 100 (SSM with Transfer State, or "STS") compared to the state-of-the-art (SOTA) models on three dense video captioning benchmarks: VITT (as described in Gabriel Huang, et al. Multimodal pretraining for dense video captioning. In AACL-IJCNLP, 2020), ActivityNet (as described in Fabian Caba Heilbron, et al. Activitynet: A large-scale video benchmark for human activity understanding. In CVPR, 2015), and YouCook2 (as described in Luowei Zhou, et al. Towards automatic learning of procedures from web instructional videos. In Proceedings of the AAAI Conference on Artificial Intelligence, volume 32, 2018).

The SOTA models include the UEDVC model (as described in described in Qi Zhang, Yuqing Song, and Qin Jin. Unifying event detection and captioning as sequence generation via pre-training. In ECCV, 2022), the Masked model (as described in Luowei Zhou, et al. End-to-end dense video captioning with masked transformer. CVPR, 2018), the PDVC model (as described in Teng Wang, et al. Endto-end dense video captioning with parallel decoding. In ICCV, 2021), the E2ESG model (as described in Wanrong Zhu, et al. End-to-end dense video captioning as sequence generation. In COLING, 2022), the TimeCh model (as described in Shuhuai Ren, et al. Timechat: A time-sensitive multimodal large language model for long video understanding. In Proceedings of the IEEE/CVF Conference on Computer Vision and Pattern Recognition, 2024), the OmniV model (as described in Junke Wang, et al. Omnivid: A generative framework for universal video understanding. In Proceedings of the IEEE/CVF Conference on Computer Vision and Pattern Recognition, pages 18209-18220, 2024), the Vid2Seq model (as described in Antoine Yang, et al. Vid2seq: Large-scale pretraining of a visual language model for dense video captioning. CVPR, 2023), the DIBS model (as described in Hao Wu, et al. Dibs: Enhancing dense video captioning with unlabeled videos via pseudo boundary enrichment and online refinement. In Proceedings of the IEEE/CVF Conference on Computer Vision and Pattern Recognition, 2024), the SDC model (as described in Xingyi Zhou, et al. Streaming dense video captioning. In CVPR, 2024), the VMS model (as described in Guo Chen, et al. Video mamba suite: State space model as a versatile alternative for video understanding. In https://arxiv.org/abs/2403.09626, 2024).

It will be appreciated that the state-space model system 100 (STS) shows strong performance, outperforming most known SOTA models under standard evaluation metrics that include SODA (S), CIDEr (C), METEOR (M), and localization (F1 score). The state-space model system 100 does not require pretraining on a large-scale video dataset, similar to the models at the top section. The models in the middle section require pretraining on a large-scale video dataset (e.g., the YT-Temporal-1B dataset as described in Antoine Yang, et al. Vid2seq: Large-scale pretraining of a visual language model for dense video captioning. CVPR, 2023), the HowTo100M dataset (as described in Hao Wu, et al. Dibs: Enhancing dense video captioning with unlabeled videos via pseudo boundary enrichment and online refinement. In Proceedings of the IEEE/CVF Conference on Computer Vision and Pattern Recognition, 2024), and the WebLI dataset (as described in Xingyi Zhou, et al. Streaming dense video captioning. In CVPR, 2024). The bottom section, including the state-space model system 100, are SSM-based models, all other models use Transformers. † denote models which are trained on datasets that are not public.

In this specification, the term "configured" is used in relation to computing systems and environments, as well as computer program components. A computing system or environment is considered "configured" to perform specific operations or actions when it possesses the necessary software, firmware, hardware, or a combination thereof, enabling it to carry out those operations or actions during operation. For instance, configuring a system might involve installing a software library with specific algorithms, updating firmware with new instructions for handling data, or adding a hardware component for enhanced processing capabilities. Similarly, one or more computer programs are "configured" to perform particular operations or actions when they contain instructions that, upon execution by a computing device or hardware, cause the device to perform those intended operations or actions.

The embodiments and functional operations described in this specification can be implemented in various forms, including digital electronic circuitry, software, firmware, computer hardware (encompassing the disclosed structures and their structural equivalents), or any combination thereof. The subject matter can be realized as one or more computer programs, essentially modules of computer program instructions encoded on a tangible non-transitory storage medium for execution by or to control the operation of a computing device or hardware. The storage medium can be a storage device such as a hard drive or solid-state drive (SSD), a storage medium, a random or serial access memory device, or a combination of these. Additionally or alternatively, the program instructions can be encoded on a transmitted signal, such as a machine-generated electrical, optical, or electromagnetic signal, designed to carry information for transmission to a receiving device or system for execution by a computing device or hardware. Furthermore, implementations may leverage emerging technologies like quantum computing or neuromorphic computing for specific applications, and may be deployed in distributed or cloud-based environments where components reside on different machines or within a cloud infrastructure.

The term "computing device or hardware" refers to the physical components involved in data processing and encompasses all types of devices and machines used for this purpose. Examples include processors or processing units, computers, multiple processors or computers working together, graphics processing units (GPUs), tensor processing units (TPUs), and specialized processing hardware such as field-programmable gate arrays (FPGAs) or application-specific integrated circuits (ASICs). In addition to hardware, a computing device or hardware may also include code that creates an execution environment for computer programs. This code can take the form of processor firmware, a protocol stack, a database management system, an operating system, or a combination of these elements. Embodiments may particularly benefit from utilizing the parallel processing capabilities of GPUs, in a General-Purpose computing on Graphics Processing Units (GPGPU) context, where code specifically designed for GPU execution, often called kernels or shaders, is employed. Similarly, TPUs excel at running optimized tensor operations crucial for many machine learning algorithms. By leveraging these accelerators and their specialized programming models, the system can achieve significant speedups and efficiency gains for tasks involving artificial intelligence and machine learning, particularly in areas such as computer vision, natural language processing, and robotics.

A computer program, also referred to as software, an application, a module, a script, code, or simply a program, can be written in any programming language, including compiled or interpreted languages, and declarative or procedural languages. It can be deployed in various forms, such as a standalone program, a module, a component, a subroutine, or any other unit suitable for use within a computing environment. A program may or may not correspond to a single file in a file system and can be stored in various ways. This includes being embedded within a file containing other programs or data (e.g., scripts within a markup language document), residing in a dedicated file, or distributed across multiple coordinated files (e.g., files storing modules, subprograms, or code segments). A computer program can be executed on a single computer or across multiple computers, whether located at a single site or distributed across multiple sites and interconnected through a data communication network. The specific implementation of the computer programs may involve a combination of traditional programming languages and specialized languages or libraries designed for GPGPU programming or TPU utilization, depending on the chosen hardware platform and desired performance characteristics.

In this specification, the term "engine" broadly refers to a software-based system, subsystem, or process designed to perform one or more specific functions. An engine is typically implemented as one or more software modules or components installed on one or more computers, which can be located at a single site or distributed across multiple locations. In some instances, one or more dedicated computers may be used for a particular engine, while in other cases, multiple engines may operate concurrently on the same one or more computers. Examples of engine functions within the context of AI and machine learning could include data preprocessing and cleaning, feature engineering and extraction, model training and optimization, inference and prediction generation, and post-processing of results. The specific design and implementation of engines will depend on the overall architecture and the distribution of computational tasks across various hardware components, including CPUs, GPUs, TPUs, and other specialized processors.

The processes and logic flows described in this specification can be executed by one or more programmable computers running one or more computer programs to perform functions by operating on input data and generating output. Additionally, graphics processing units (GPUs) and tensor processing units (TPUs) can be utilized to enable concurrent execution of aspects of these processes and logic flows, significantly accelerating performance. This approach offers significant advantages for computationally intensive tasks often found in AI and machine learning applications, such as matrix multiplications, convolutions, and other operations that exhibit a high degree of parallelism. By leveraging the parallel processing capabilities of GPUs and TPUs, significant speedups and efficiency gains compared to relying solely on CPUs can be achieved. Alternatively or in combination with programmable computers and specialized processors, these processes and logic flows can also be implemented using specialized processing hardware, such as field-programmable gate arrays (FPGAs) or application-specific integrated circuits (ASICs), for even greater performance or energy efficiency in specific use cases.

Computers capable of executing a computer program can be based on general-purpose microprocessors, special-purpose microprocessors, or a combination of both. They can also utilize any other type of central processing unit (CPU). Additionally, graphics processing units (GPUs), tensor processing units (TPUs), and other machine learning accelerators can be employed to enhance performance, particularly for tasks involving artificial intelligence and machine learning. These accelerators often work in conjunction with CPUs, handling specialized computations while the CPU manages overall system operations and other tasks. Typically, a CPU receives instructions and data from read-only memory (ROM), random access memory (RAM), or both. The elements of a computer include a CPU for executing instructions and one or more memory devices for storing instructions and data. The specific configuration of processing units and memory will depend on factors like the complexity of the AI model, the volume of data being processed, and the desired performance and latency requirements. Embodiments can be implemented on a wide range of computing platforms, from small embedded devices with limited resources to large-scale data center systems with high-performance computing capabilities. The system may include storage devices like hard drives, SSDs, or flash memory for persistent data storage.

Computer-readable media suitable for storing computer program instructions and data encompass all forms of non-volatile memory, media, and memory devices. Examples include semiconductor memory devices such as read-only memory (ROM), solid-state drives (SSDs), and flash memory devices; hard disk drives (HDDs); optical media; and optical discs such as CDs, DVDs, and Blu-ray discs. The specific type of computer-readable media used will depend on factors such as the size of the data, access speed requirements, cost considerations, and the desired level of portability or permanence.

To facilitate user interaction, embodiments of the subject matter described in this specification can be implemented on a computing device equipped with a display device, such as a liquid crystal display (LCD) or an organic light-emitting diode (OLED) display, for presenting information to the user. Input can be provided by the user through various means, including a keyboard), touchscreens, voice commands, gesture recognition, or other input modalities depending on the specific device and application. Additional input methods can include acoustic, speech, or tactile input, while feedback to the user can take the form of visual, auditory, or tactile feedback. Furthermore, computers can interact with users by exchanging documents with a user's device or application. This can involve sending web content or data in response to requests or sending and receiving text messages or other forms of messages through mobile devices or messaging platforms. The selection of input and output modalities will depend on the specific application and the desired form of user interaction.

Machine learning models can be implemented and deployed using machine learning frameworks, such as TensorFlow or JAX. These frameworks offer comprehensive tools and libraries that facilitate the development, training, and deployment of machine learning models.

Embodiments of the subject matter described in this specification can be implemented within a computing system comprising one or more components, depending on the specific application and requirements. These may include a back-end component, such as a back-end server or cloud-based infrastructure; an optional middleware component, such as a middleware server or application programming interface (API), to facilitate communication and data exchange; and a front-end component, such as a client device with a user interface, a web browser, or an app, through which a user can interact with the implemented subject matter. For instance, the described functionality could be implemented solely on a client device (e.g., for on-device machine learning) or deployed as a combination of front-end and back-end components for more complex applications. These components, when present, can be interconnected using any form or medium of digital data communication, such as a communication network like a local area network (LAN) or a wide area network (WAN) including the Internet. The specific system architecture and choice of components will depend on factors such as the scale of the application, the need for real-time processing, data security requirements, and the desired user experience.

The computing system can include clients and servers that may be geographically separated and interact through a communication network. The specific type of network, such as a local area network (LAN), a wide area network (WAN), or the Internet, will depend on the reach and scale of the application. The client-server relationship is established through computer programs running on the respective computers and designed to communicate with each other using appropriate protocols. These protocols may include HTTP, TCP/IP, or other specialized protocols depending on the nature of the data being exchanged and the security requirements of the system. In certain embodiments, a server transmits data or instructions to a user's device, such as a computer, smartphone, or tablet, acting as a client. The client device can then process the received information, display results to the user, and potentially send data or feedback back to the server for further processing or storage. This allows for dynamic interactions between the user and the system, enabling a wide range of applications and functionalities.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

What is claimed is:

## Claims

1. A method performed by one or more computers, the method comprising:

   receiving an input sequence of multidimensional data;
   partitioning the input sequence of multidimensional data into a sequence of data segments;
   for each data segment that is after a first data segment in the sequence of data segments:

   processing the data segment using an encoder neural network to generate an encoded representation of the data segment; and
   generating a hidden state that corresponds to the data segment by using a neural state-space model to process the encoded representation of the data segment and a preceding hidden state that corresponds to a preceding data segment that precedes the data segment in the sequence of data segments, wherein the neural state-space model comprises one or more layers, each layer comprising a convolution kernel, the convolution kernel comprising parameters that represent a state matrix, an input matrix, and an output matrix of a state-space model; and

   for each of one or more data segments in the sequence of data segments, generating, using a decoder neural network and based on a previous hidden state that corresponds to a preceding data segment, an output that characterizes the data segment.

2. The method of claim 1, further comprising, for the first data segment in the sequence of data segments:

   processing the first data segment using the encoder neural network to generate an encoded representation of the first data segment;
   generating an output of the neural state-space model that corresponds to the first data segment by using the neural state-space model to process the encoded representation of the first data segment; and
   generating, using the decoder neural network and from the output of the neural state-space model that corresponds to the first data segment, an output that characterizes the first data segment.

3. The method of any one of claims 1-2, wherein the input sequence of multi-dimensional data comprises an input sequence of video data.

4. The method of claim 3, wherein the input sequence of video data comprises a live stream of video data that is being streamed.

5. The method of any one of claims 1-2, wherein the input sequence of multi-dimensional data comprises an input sequence of audio data.

6. The method of any one of claims 1-5, wherein the state matrix is a diagonal matrix.

7. The method of any one of claims 3-6, when also dependent on claim 3, wherein the encoder neural network comprises a vision Transformer neural network, and wherein the encoded representation of the data segment comprises a plurality of visual tokens.

8. The method of any one of claims 3-7, when also dependent on claim 3, wherein the decoder neural network comprises a text decoder neural network, and wherein the output that characterizes the data segment comprises a text caption of a video segment that comprises one or more video frames.

9. A system comprising:

   one or more computers; and
   one or more storage devices storing instructions that, when executed by the one or more computers, cause the one or more computers to perform the respective operations of any one of claims 1-8.

10. One or more computer-readable storage media storing instructions that when executed by one or more computers cause the one or more computers to perform the respective operations of the method of any one of claims 1-8.

EP 4 745 840 A1

101

FIG. 1

SSM System 100

Text Decoder 130

SSM output

K  SSM state
S4d layers
SSM init state
120

Text Decoder

K  SSM state
S4d layers
SSM state

Text Decoder

K  SSM state
S4d layers
SSM state

Visual tokens

Bottleneck Transformer  Bottleneck Transformer

Bottleneck Transformer  Bottleneck Transformer

Bottleneck Transformer  Bottleneck Transformer

110  ViT Encoder  ViT Encoder

ViT Encoder  ViT Encoder

ViT Encoder  ViT Encoder

Patch Proj. layer  Patch Proj. layer

Patch Proj. layer  Patch Proj. layer

Patch Proj. layer  Patch Proj. layer

Video frames

. . .

. . .

. . .

Video Segment 1

Video Segment 2

Video Segment 3

Time

102

200

Receive an input sequence of multi-dimensional data

202

Partition the input sequence of multi-dimensional data into a sequence of data segments

204

For each data segment:

Generate an encoded representation

206

Generate a hidden state that corresponds to the data segment

208

Generate an output that characterizes the video segment

210

FIG. 2

Receive a SSM layer input

302

Generate a SSM layer output

304

Generate a hidden state

306

FIG. 3

| Method | ViTT | | | | YouCook2 | | | | ActivityNet | | | |
|--------|------|---|---|----|----------|---|---|----|-------------|---|---|----|
| | S | C | M | F1 | S | C | M | F1 | S | C | M | F1 |
| UEDVC | - | - | - | - | 3.3 | 8.4 | 2.2 | - | 5.5 | - | - | - |
| Masked | - | - | - | - | - | 6.1 | 3.2 | - | - | 9.3 | 5.0 | - |
| PDVC | - | - | - | - | 4.9 | 28.9 | 5.7 | - | 6.0 | 29.3 | 7.6 | - |
| E2ESG | - | - | - | - | - | 25.0 | 3.5 | - | - | - | - | - |
| TimeCh | - | - | - | - | 3.4 | 11.0 | - | 19.5 | - | - | - | - |
| OmniV | - | - | - | - | - | - | - | - | - | 26.0 | 7.5 | - |
| Vid2Seq | 9.8 | 23.0 | 5.0 | **37.7** | 5.7 | 25.3 | 6.4 | 23.5 | 5.9 | 30.2 | 8.5 | 51.8 |
| DIBS† | - | - | - | - | 6.4 | **44.4** | 7.5 | 31.4 | 5.9 | 31.9 | 8.9 | **55.6** |
| SDC† | **10.0** | 25.2 | 5.8 | 35.4 | 6.0 | 32.9 | 7.1 | 24.1 | 6.2 | **37.8** | 10.0 | 52.9 |
| GIT† | 7.1 | 15.1 | 3.4 | 32.5 | 3.1 | 12.1 | 3.4 | 17.7 | 5.7 | 29.8 | 7.8 | 50.6 |
| VMS | - | - | - | - | 4.3 | 22.1 | 4.4 | 28.4 | 5.3 | 26.8 | 7.2 | 54.3 |
| **STS** | 8.5 | **42.4** | **19.6** | 34.9 | **9.7** | 37.8 | **18.7** | **37.7** | **8.9** | 33.4 | **16.0** | 41.6 |

FIG. 4

## EUROPEAN SEARCH REPORT

**Application Number**

EP 25 21 5962

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ERIC NGUYEN ET AL: "S4ND: Modeling Images and Videos as Multidimensional Signals Using State Spaces", ARXIV.ORG, CORNELL UNIVERSITY LIBRARY, 201 OLIN LIBRARY CORNELL UNIVERSITY ITHACA, NY 14853, 12 October 2022 (2022-10-12), XP091342261, | 1-7,9,10 | INV. G06N3/045 G06N3/0475 |
| A | * abstract; figure 1 * <br> * 1. Introduction * <br> * 4. Method * <br> * 5.1. S4ND in 1D & 2D: Large-scale Image Classification * | 8 | |
| X | Anonymous: "An image is worth 16x16 words: Transformers for image recognition at scale", , 22 October 2020 (2020-10-22), pages 1-22, XP055883987, Retrieved from the Internet: URL:https://arxiv.org/pdf/2010.11929v1 [retrieved on 2022-01-26] | 1-7,9,10 | |
| A | * figure 1 * | 8 | TECHNICAL FIELDS SEARCHED (IPC) <br><br> G06N |
| A | ISLAM MD MOHAIMINUL ET AL: "Long Movie Clip Classification with State-Space Video Models", 27 October 2022 (2022-10-27), SPRINGER INTERNATIONAL PUBLISHING, PAGE(S) 87 - 104, XP047639090, * abstract; figure 2 * | 1-10 | |

-/--

The present search report has been drawn up for all claims

| Place of search | Date of completion of the search | Examiner |
|---|---|---|
| The Hague | 2 March 2026 | De Meyer, Arnaud |

Europäisches Patentamt

European Patent Office

Office européen des brevets

# EUROPEAN SEARCH REPORT

**Application Number**

EP 25 21 5962

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUO CHEN ET AL: "Video Mamba Suite: State Space Model as a Versatile Alternative for Video Understanding", ARXIV.ORG, CORNELL UNIVERSITY LIBRARY, 201 OLIN LIBRARY CORNELL UNIVERSITY ITHACA, NY 14853, 14 March 2024 (2024-03-14), XP091700085, * page 1 - page 2 * * page 4 - page 5 * * page 8 * ----- | 1-10 | |
| T | Piergiovanni A J ET AL: "Time-Scaling State-Space Models for Dense Video Captioning", , 3 September 2025 (2025-09-03), pages 1-14, XP093371488, Retrieved from the Internet: URL:https://arxiv.org/pdf/2509.03426 * abstract * ----- | | |

**TECHNICAL FIELDS SEARCHED (IPC)**

The present search report has been drawn up for all claims

| Place of search | Date of completion of the search | Examiner |
|---|---|---|
| The Hague | 2 March 2026 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63720714

**Non-patent literature cited in the description**

- **ALBERT GU** ; **KARAN GOEL** ; **CHRISTOPHER RÉ**. Efficiently modeling long sequences with structured state spaces. *ICLR*, 2022
- **ALBERT GU** ; **ANKIT GUPTA** ; **KARAN GOEL** ; **CHRISTOPHER RÉ**. *On the parameterization and initialization of diagonal state space models.*, 2022
- **ERIC NGUYEN** ; **KARAN GOEL** ; **ALBERT GU** ; **GORDON W. DOWNS** ; **PREEY SHAH** ; **TRI DAO** ; **STEPHEN A. BACCUS** ; **CHRISTOPHER RÉ**. *S4ND: Modeling images and videos as multidimensional signals using state spaces.*, 2022
- **SCOTT W. LINDERMAN** ; **JIMMY T.H. SMITH** ; **ANDREW WARRINGTON**. Simplified state space layers for sequence modeling.. *arXiv preprint arXiv:2208.04933*, 2022
- **RADFORD, ALEC et al.** Learning transferable visual models from natural language supervision.. *International conference on machine learning. PMLR*, 2021
- **ALAYRAC, JEAN-BAPTISTE et al.** Flamingo: a visual language model for few-shot learning. *Advances in neural information processing systems*, 2022, vol. 35, 23716-23736
- **YANG, ANTOINE et al.** Vid2seq: Large-scale pre-training of a visual language model for dense video captioning.. *Proceedings of the IEEE/CVF Conference on Computer Vision and Pattern Recognition.*, 2023
- **GABRIEL HUANG et al.** Multimodal pretraining for dense video captioning.. *AACL-IJCNLP*, 2020
- **FABIAN CABA HEILBRON et al.** Activitynet: A large-scale video benchmark for human activity understanding. *CVPR*, 2015
- **LUOWEI ZHOU et al.** Towards automatic learning of procedures from web instructional videos.. *Proceedings of the AAAI Conference on Artificial Intelligence*, 2018, vol. 32
- **QI ZHANG** ; **YUQING SONG** ; **QIN JIN**. Unifying event detection and captioning as sequence generation via pre-training. *ECCV*, 2022
- **LUOWEI ZHOU et al.** Endto-end dense video captioning with masked transformer.. *CVPR*, 2018
- **TENG WANG et al.** Endto-end dense video captioning with parallel decoding.. *ICCV*, 2021
- **WANRONG ZHU et al.** End-to-end dense video captioning as sequence generation.. *COLING*, 2022
- **SHUHUAI REN et al.** Timechat: A time-sensitive multimodal large language model for long video understanding.. *Proceedings of the IEEE/CVF Conference on Computer Vision and Pattern Recognition*, 2024
- **JUNKE WANG et al.** Omnivid: A generative framework for universal video understanding.. *Proceedings of the IEEE/CVF Conference on Computer Vision and Pattern Recognition*, 2024, 18209-18220
- **ANTOINE YANG et al.** Vid2seq: Large-scale pre-training of a visual language model for dense video captioning.. *CVPR*, 2023
- **HAO WU et al.** Dibs: Enhancing dense video captioning with unlabeled videos via pseudo boundary enrichment and online refinement.. *Proceedings of the IEEE/CVF Conference on Computer Vision and Pattern Recognition*, 2024
- **XINGYI ZHOU et al.** Streaming dense video captioning.. *In CVPR*, 2024
- **GUO CHEN et al.** *Video mamba suite: State space model as a versatile alternative for video understanding.*, 2024, https://arxiv.org/abs/2403.09626
- **HAO WU et al.** Dibs: Enhancing dense video captioning with unlabeled videos via pseudo boundary enrichment and online refinement.. *In Proceedings of the IEEE/CVF Conference on Computer Vision and Pattern Recognition*, 2024
- **XINGYI ZHOU et al.** Streaming dense video captioning.. *CVPR*, 2024